# EUROPEAN PATENT SPECIFICATION

(11) **EP 1 555 455 B1**
(45) Date of publication and mention of the grant of the patent: **28.02.2007**
(21) Application number: 05000709.5
(22) Date of filing: 14.01.2005
(51) Int. Cl.: F16G 5/18

(54) **Power transmission chain and power transmission device using same**
Treibkette und diese verwendende Antriebsvorrichtung
Chaîne de transmission et dispositif de transmission l'utilisant

(30) Priority: 14.01.2004 JP 2004006611
(43) Date of publication of application: 20.07.2005
(73) Proprietor: JTEKT Corporation, Chuo-ku, Osaka-shi Osaka 542-8502 (JP)
(72) Inventor: Lou, Liming, Yamatokooriyama-shi Nara, 639-1131 (JP)
(74) Representative: Sajda, Wolf E.

(56) References cited:
- EP-A- 0 741 255
- DE-U1- 8 418 896
- US-A- 4 631 042
- US-A1- 2001 019 978
- PATENT ABSTRACTS OF JAPAN vol. 2003, no. 12, 5 December 2003 (2003-12-05) -& JP 2004 301257 A (KOYO SEIKO CO LTD), 28 October 2004 (2004-10-28)

## Description

### 1. Field of the Invention

The present invention relates to a power transmission chain and a power transmission device using same employed in a chain-type continuously variable transmission (CVT) and the like employed in vehicles and the like.

### 2. Description of the Prior Art

A motor vehicle CVT is provided with, for example, a drive pulley fitted to the engine, a driven pulley fitted to the drive wheel, and an endless chain spanning both pulleys. The afore-mentioned chain has a plurality of links, and a plurality of pins mutually joining these links, and a plurality of strips.

In the chain-type CVT related to the afore-mentioned configuration, the sheave face of conical shape of each pulley and the chain pin end faces are in slight sliding contact in the circumferential direction of the sheave face. Thus, traction is generated and power torque is transmitted.

The chain-type CVT is able to continuously vary speed by continuously varying the width of the groove (distance between sheave faces) of at least one of the drive and driven pulleys. Furthermore, this action of varying speed is extremely smooth in comparison with existing commonly used gear-type transmission (see, for example, JP-A-08-312725).

However, in the afore-mentioned conventional chain-type CVT, when the chain pin end face and the sheave face are in contact, a contact noise is generated, constituting the cause of the noise of chain-type CVTs.

The cause of the generated afore-mentioned contact noise is, for example, as follows.

In the chain-type CVT, the chain comprises a plurality of links joined together, and contacts the pulley while vibrating due to polygonal movement. At contact, the contact points provided at both end faces of the pins move such as to contact the pulley at an angle to the direction of the tangent from the pulley. Simultaneously with contact, the direction of movement of the contact point changes in the direction of the tangent from the pulley. At this time, contact noise is generated in association with the changing of the angle in relation to the contact point of the pulley. This contact noise increases as the change in the afore-mentioned angle increases.

### OBJECT AND SUMMARY OF THE INVENTION

With the foregoing in view, it is an object of the present invention to provide a power transmission chain and power transmission device using same wherein the generation of noise can be effectively reduced.

The power transmission chain of the present invention provides a power transmission chain spanning a first pulley having a sheave face of conical shape and a second pulley having a sheave face of conical shape, a plurality of links, and a plurality of pins mutually joining the afore-mentioned plurality of links with both end faces of the pins contacting the sheave faces of the first and second pulleys and having contact points formed such as to contact the afore-mentioned sheave face forward of the center position of each end face in the direction of movement of the chain.

According to the power transmission chain of the afore-mentioned configuration, since the contact point of the sheave faces with the pin end face is formed forward of the center position of the relevant end face in the direction of movement of the chain, the contact point moves in contact while forming a small angle in relation to the direction of the tangent from the pulley. Simultaneously with contact, the direction of movement of the contact point changes to the direction of the tangent from the pulley. In other words, the change in the angle of the contact point in relation to the pulley is reduced, and the contact noise associated with the change in angle can be reduced. Thus, the generation of noise can be reduced.
The object underlying the present invention is solved by a chain and a device as specified in claims 1 and 8. Advantageous further developments of the chain and the device are specified in the subclaims.

### BRIEF DESCRIPTION OF THE DRAWINGS

FIG. 1 is a perspective view in schematic format of the essential components of a chain-type CVT wherein a power transmission chain related to the first embodiment of the present invention is installed;
FIG. 2 is an enlarged cross-sectional view of part of the driven pulley and chain of the chain-type CVT shown in FIG. 1;
FIG. 3 is a perspective view in schematic format of the essential components of the power transmission chain;
FIG. 4 is a side elevation of a link of the same chain;
FIG. 5 is a partial cross-sectional view along the length of the pin of the power transmission chain;
FIG. 6 is a partial cross-sectional view across the width of the same power transmission chain;
FIG. 7 is a partial cross-sectional side elevation of the power transmission chain viewed from the pin end face.
FIG. 8 is a definition drawing showing the coordinate axis identifying the position of the contact point;
FIG. 9 is a definition drawing showing the coordinate axis indicating the track of the contact point contacting the pulley;
FIG. 10 comprises graphs (a) through (d) progressively showing the track of the contact point as the position of the contact point on the pin end face is changed in steps from the center position in the direction of movement of the chain;
FIG. 11 is a graph showing the relationship between the position of the contact point on the pin end face and the approach angle;
FIG. 12 is a graph showing the relationship between the position of the contact point on the pin end face and the amplitude of the track of the contact point;
FIG.13 is a graph showing the sound pressure level at each frequency when the contact point is displaced by 1mm from the center position of the pin end face in the direction of movement of the chain;
FIG. 14 is a graph showing the sound pressure level at each frequency when the contact point is provided at the center position of the pin end face;
FIG. 15 is a side elevation viewed from the pin end face of the power transmission chain related to the second embodiment of the present invention;
FIG. 16 is a side elevation viewed from the pin end face of the power transmission chain related to the third embodiment of the present invention;
FIG. 17 is a side elevation viewed from the pin end face of the power transmission chain related to the fourth embodiment of the present invention;
FIG. 18 is a side elevation showing the pin and strip inserted in the link of the power transmission chain related to the fifth embodiment of the present invention; and
FIG. 19 is an outline drawing describing the desirable involute shape.
FIG. 20 is a side elevation of a link of the power transmission chain;

### DESCRIPTION OF THE PREFERRED EMBODIMENTS

Description will be made of the desirable embodiments of the present invention in reference to the figures.

### First Embodiment

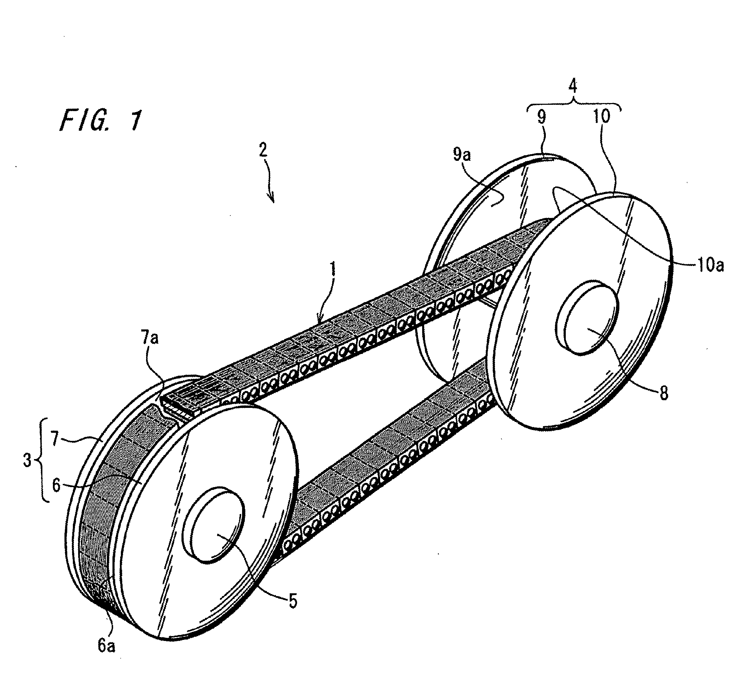

FIG. 1 shows the chain-type continuously variable transmission 2 (hereafter referred to simply as a 'CVT') wherein a power transmission chain 1 (hereafter referred to simply as a 'chain') related to the first embodiment of the present invention is installed.

The CVT 2 is, for example, that mounted in a motor vehicle. This CVT 2 is provided with a metal (of structural steel and the like) drive pulley 3 as the first pulley, a metal (of structural steel and the like) driven pulley 4 as the second pulley, and an endless chain 1 spanning the first and second pulleys.

In FIG. 1, part of the chain 1 is sectioned to aid understanding.

The drive pulley 3 is fitted integrally and rotatably to an input shaft 5 connected to a motor vehicle engine. This drive pulley 3 is provided with a fixed sheave 6 having a sheave face 6a of conical shape, and a movable sheave 7 having a sheave face 7a of conical shape positioned opposite this sheave face 6a.

The space between these sheave faces 6a and 7a constitutes a groove spanned by the chain 1. The sheave faces 6a and 7a hold the chain 1 within this groove strongly from both sides in the width direction.

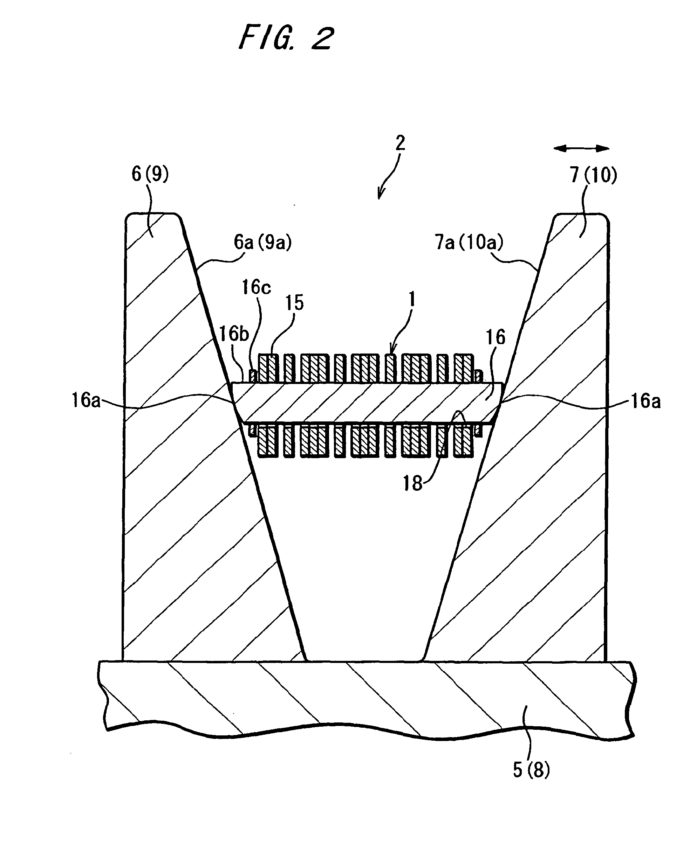

Furthermore, a hydraulic actuator (not shown in figure) is connected to this movable sheave 7 to change the width of the groove. When changing speed, this hydraulic actuator moves the movable sheave 7 in the left-right direction in FIG. 2 to change the width of the groove. When the width of the groove changes, the chain 1 moves in the top-bottom direction in FIG. 2. As a result, the radius over which the chain 1 is applied to the input shaft 5 is changed.

The driven pulley 4 is fitted integrally and rotatably to an output shaft 8 connected to a motor vehicle drive wheel. This driven pulley 4 is provided with a fixed sheave 9 having a sheave face 9a of conical shape, and a movable sheave 10 having a sheave face 10a of conical shape positioned opposite this sheave face 9a.

The space between these sheave faces 9a and 10a constitutes a groove spanned by the chain 1. The sheave faces 9a and 10a hold the chain 1 within this groove strongly from both sides in the width direction. Furthermore, as with the movable sheave 7 of the drive pulley 3, a hydraulic actuator (not shown in figure) is connected to the movable sheave 10 of this driven pulley 4. When changing speed, this hydraulic actuator moves the movable sheave 10 in the left-right direction in FIG. 2 to change the width of the groove. When the width of the groove changes, the chain 1 moves in the top-bottom direction in FIG. 2. As a result, the radius over which the chain 1 is applied to the output shaft 8 is changed.

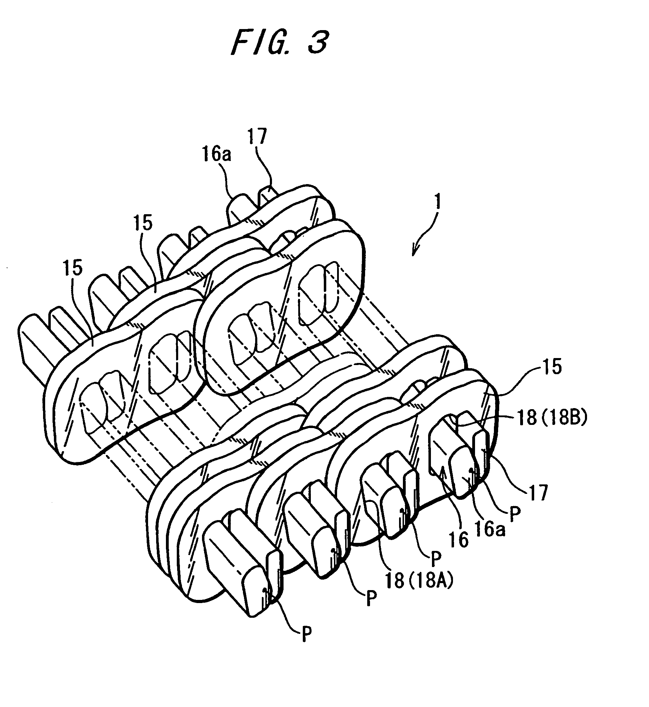

As shown in FIG. 3, chain 1 is endless, and comprises a plurality of metal (bearing steel and the like) links 15, a plurality of metal (bearing steel and the like) pins (also referred to as a 'first pin') 16 mutually joining these links 15, and a plurality of strips (also referred to a 'second pin', 'inter-piece', or 'non-contact pin') 17 being slightly shorter in the length direction than the length in the length direction of the pins 16.

In FIG. 3, the links 15 and pins 16 and the like arranged at the approximate center in the width direction of the chain 1 are partially omitted.

The external outline of each of the links 15 forms a smooth curve, and all links 15 are, in practice, formed such as to be of the same shape. Each link 15 has through-holes 18 through which pins 16 and strips 17 are inserted, these holes being formed as a first through-hole 18A and second through-hole 18B.

The first through-hole 18A and second through-hole 18B are of mutually different shape, and are formed such that they are arrayed in the length direction of the chain 1.

The afore-mentioned links 15 are each parallel in the width direction of the chain 1, and are arrayed in the prescribed sequence. The links 15 are joined in the length direction of the chain 1 (direction of power transmission) such as to allow curvature.

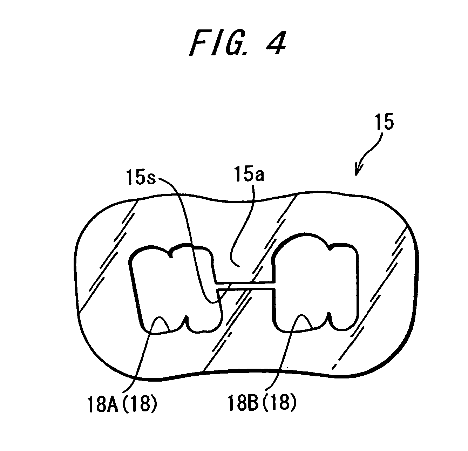

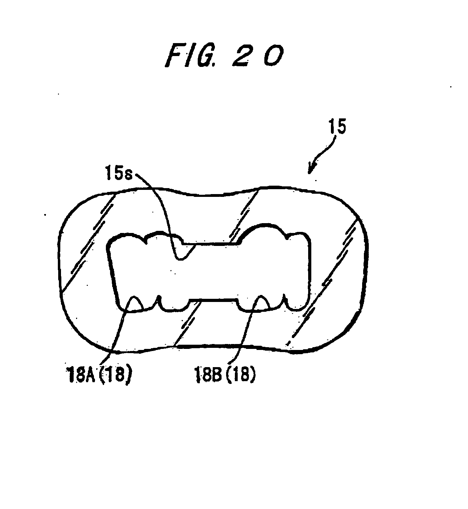

The first through-hole 18A and second through-hole 18B in the afore-mentioned links 15 are separate and opposite each other, however a communicating groove (slit) 15s may be formed to make the through-holes 18A and 18B in communication with each other (see FIGS. 4 and 20). In the link 15 shown in FIG. 4, a communicating groove 15s is formed in the columnar part 15a between the through-holes 18A and 18B. Further, in the link 15 shown in FIG. 20, the communicating groove 15s is formed with a larger width than in the link 15 shown in FIG. 4. In these cases, the elastic deformation of the link 15 is facilitated, and the stress occurring in the link 15 can be reduced.

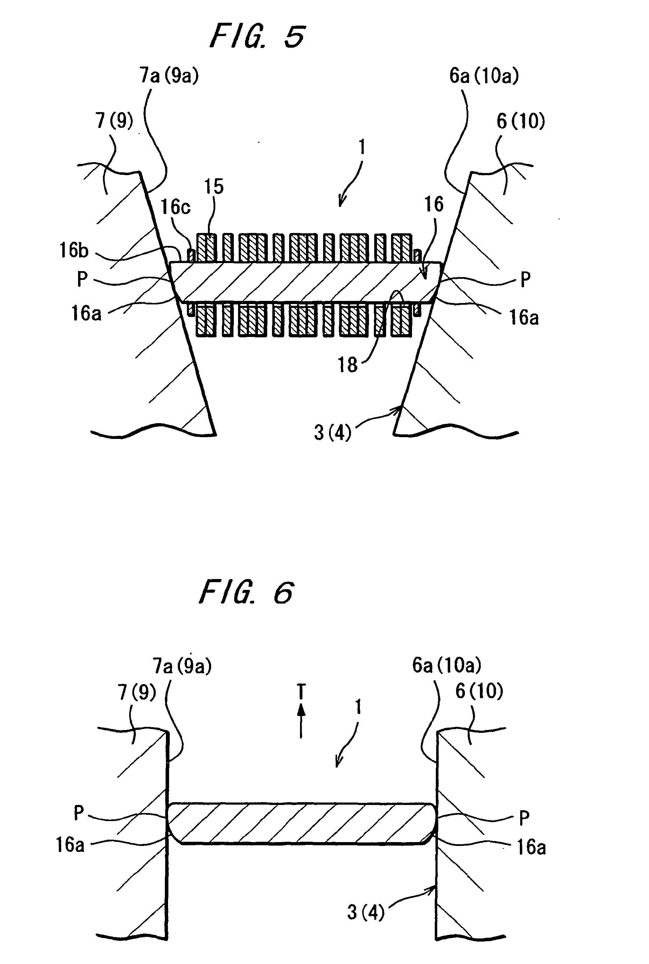

As shown in FIG. 5, each pin 16 is rod-shaped, and, except for the pin end faces 16a, has the same shape along its length. This pin 16 is inserted through the first through-hole 18A and second through-hole 18B in the links 15 arrayed in the width direction of the chain 1, and joins the links 15.

Both end faces 16a of the pin 16 in the length direction contact sheave faces 6a and 7a of the drive pulley 3, and sheave faces 9a and 10a of the driven pulley 4. Both end faces 16a of the pin 16 are formed in a spherical shape, and the apex of the spherical shape of each end face 16a contacts the sheave faces 6a and 7a of the drive pulley 3, and sheave faces 9a and 10a of the driven pulley 4. This apex is the contact point P of the pin 16.

In FIG. 5, the pin 16 is displayed as being formed as an integrated part, however both ends in the length direction of the pin (pin end face parts) and the pin body between these pin end parts can be formed separately, so that the pin 16 is comprised of the pin end parts and the pin body joined together.

Furthermore, a projection 16c is formed on the circumferential face at both ends 16b of the pin 16 in the length direction. This projection 16c holds the plurality of links 15 arrayed in the width direction of the chain 1 in place, and prevents these links 15 becoming detached.

Here, the shape of the projection 16c is not limited provided that it holds the plurality of links 15 in place. For example, a projecting ridge formed around the circumference of both ends of the pin 16 may also be used. Furthermore, a projecting ridge formed only on the circumferential face opposite the inner wall of each through-hole 18, or a plurality of separate projecting parts in a plurality of locations, may also be used.

The afore-mentioned projection can be simply formed with a caulking tool and the like. Furthermore, the projection 16c may also be formed by fixing a separate ring member (retaining ring, snap ring), split pin 16, clip, or retainer and the like to the pin 16 and strip 17. Furthermore, the pin 16 may also be fixed in place by being pressed into each through-hole 18 without providing a projection 16c.

As shown in FIG. 6, each afore-mentioned contact point **P** is formed forward of the center position of the relevant end face 16a in the direction of movement **T** of the chain on both end faces 16a of each pin 16.

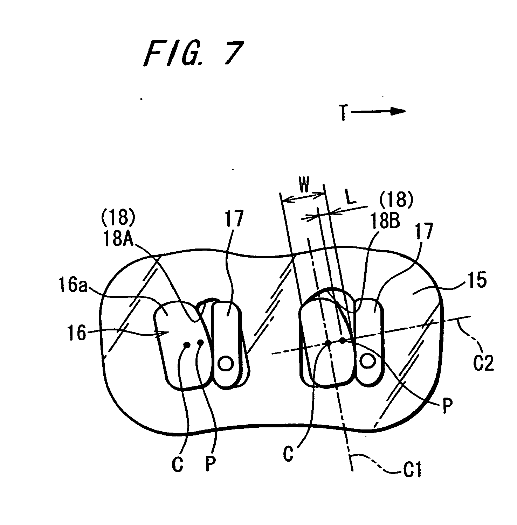

In practice, as shown in FIG. 7, this contact point **P** is provided forward of the center **C** of the relevant end face 16a in the direction of movement **T** of the chain wherein the centerline **C1** in the length direction of the pin end face 16a, and the centerline **C2** in the width direction at right angles to this centerline **C1** in the length direction intersect.

Furthermore, the contact point **P** is provided such that the distance **L** from the forward end in the direction of movement **T** of the chain in the width direction of the pin end face 16a is a distance less than 3/8 of the total width of the pin 16.

It is desirable that the contact point **P** be provided at a distance **L** from the end of the relevant end face 16a of 1/8 or greater, and more desirably at a distance from the end of the relevant end face 16a of 1/8 or greater and less than 3/8, of the total width of the end face 16a.

Each strip 17 is rod-shaped, and is formed slightly shorter than the length of the pin 16 in the length direction so that both ends of the strip 17 do not contact the sheave faces 6a and 7a of the drive pulley 3, and the sheave faces 9a and 10a of the driven pulley 4.

This strip 17 is inserted into the through-holes 18A and 18B so that one side (the contact side) contacts one side (the contact side) of the pin 16 (rolling sliding contact: contact involving rolling contact, sliding contact, or both). As the rolling contact component increases, rotation of the pin 16 in relation to the sheave faces 6a and 7a of the drive pulley 3, and the sheave faces 9a and 10a of the driven pulley 4, is progressively reduced to nil. Friction losses are therefore reduced, and a high power transmission efficiency can be achieved.

As with the pin 16, a projection may be formed on the circumferential face at both ends of these strips 17 to hold the plurality of links 15 arrayed in the width direction of the chain 1.

Speed can be changed steplessly as described below with the CVT 2 comprised as described above.

Firstly, when reducing the speed of rotation of the output shaft 8, the width of the groove on the drive pulley 3 side is increased by moving the movable sheave 7, and the radius over which the chain 1 is applied to the input shaft 5 is reduced while sliding the pin end face 16a of the chain 1 in contact towards the inside (towards the bottom in FIG. 2) of the sheave faces 6a and 7a of conical shape under the boundary lubrication condition (a lubrication condition wherein a part of the contact face is in direct contact with microscopic projections, and the remainder is in contact via a lubricant film).

On the other hand, with the driven pulley 4, the width of the groove is reduced by moving the movable sheave 10, and the radius over which the chain 1 is applied to the output shaft 8 is increased, while sliding the pin end face 16a of the chain 1 in contact towards the outside of the sheave faces 9a and 10a of conical shape under the boundary lubrication condition.

Thus, the speed of rotation of the output shaft 8 can be reduced.

Next, when increasing the speed of rotation of the output shaft 8, the width of the groove on the drive pulley 3 side is reduced by moving the movable sheave 7, and the radius over which the chain 1 is applied to the input shaft 5 is increased while sliding the pin end face 16a of the chain 1 in contact towards the outside (towards the top in FIG. 2) of the sheave faces 6a and 7a of conical shape under the boundary lubrication condition.

On the other hand, with the driven pulley 4, the width of the groove is increased by moving the movable sheave 10, and the radius over which the chain 1 is applied to the output shaft 8 is reduced while sliding the pin end face 16a of the chain 1 in contact towards the inside of the sheave faces 9a and 10a of conical shape under the boundary lubrication condition.

Thus, the speed of rotation of the output shaft 8 can be increased.

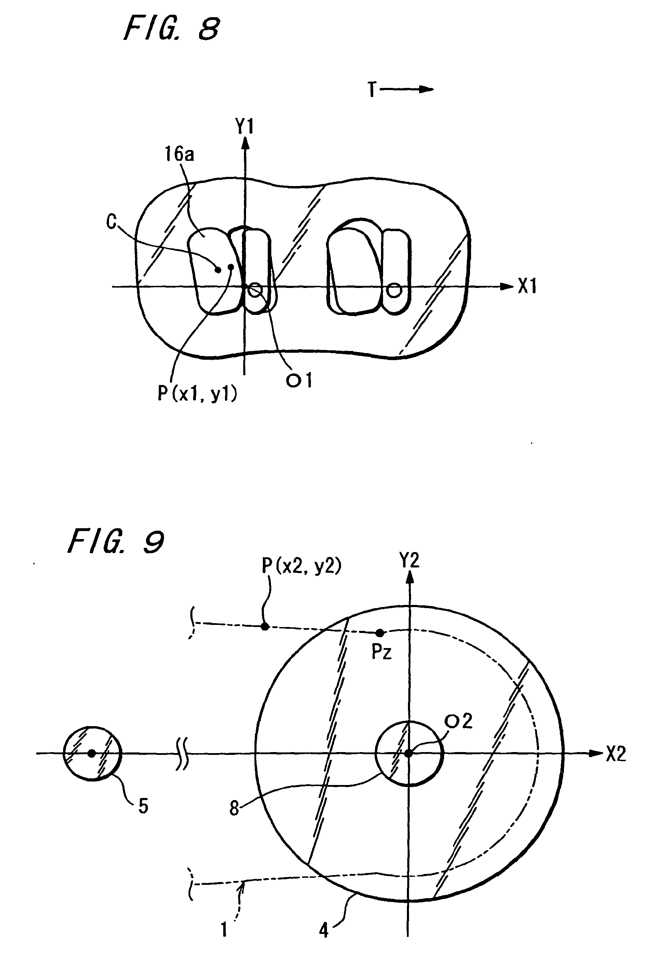

In FIG. 8, the contact point between the pin 16 and the strip 17 is established as the origin **O1** on the coordinate axes so that the position of the contact point **P** of the pin end face 16a may be expressed as coordinates (x1, y1).

In relation to the origin **O1** the **X1** axis is in the direction of movement **T** of the chain, and the **Y1** axis is at right angles to this **X1** axis.

In FIG. 9, the center of the axis of the output shaft 8 (center of rotation of the pulley 4) is established as the origin **O2** so that the track of the contact point **P** immediately prior and immediately after contact with the driven pulley 4 may be expressed as coordinates (x2, y2). The line joining the center of the axis of the input shaft 5 (center of rotation of pulley 3) and the center of the axis of the output shaft 8 is established as the **X2** axis, and the line intersecting this **X2** axis at the origin **O2** is established as the **Y2** axis. Furthermore, the position wherein the contact point **P** begins to contact the driven pulley 4 is established as the contact start point **Pz**.

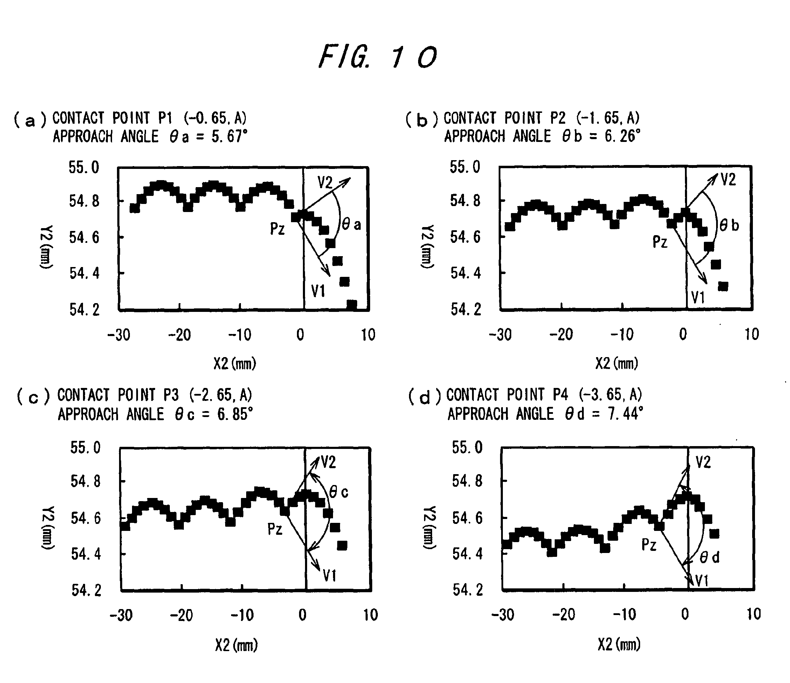

FIG. 10 plots the track of the contact point **P** in FIG. 9, and shows the approach angle θ obtained from this track.

The approach angle θ here is the angle formed by the velocity vector **V1** at the contact point **P** at the instant the contact point **P** contacts the pulleys 3 and 4 at the contact start point **Pz**, and the direction of the tangent **V2** from the pulleys 3 and 4 at the same contact start point **Pz**.

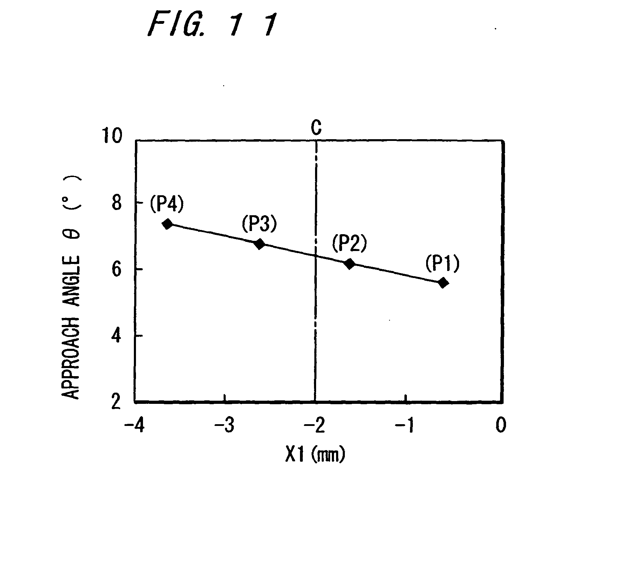

The graphs (a) through (d) in FIG. 10 show the tracks when the contact point **P** is changed to each of the four types of contact points **P1** through **P4** in FIG. 8. FIG. 11 shows the relationship between the position of contact point **P** on the **X1** axis and the approach angle θ in FIG. 8.

The position of the contact point **P** is changed by changing the spherical shape of the end face 16a.

The total width **W** of the end face 16a of the pin 16 is 4mm. The coordinates of the contact points **P1** through **P4** are **P1 (-0.65, A), P2 (-1.65, A), P3 (-2.65, A),** and **P4 (-3.65, A).** The value of **A** is fixed.

The afore-mentioned contact points **P3** and **P4** are points provided behind the center position **C** of the pin end face 16a relative to the direction of movement **T** of the chain. The contact points **P1** and **P2** are points provided forward of the center position **C** of the pin end face 16a relative to the direction of movement **T** of the chain.

Furthermore, the contact point **P1** is provided such that the distance **L** from the forward end in the direction of movement **T** of the chain on the pin end face 16a is a distance less than 3/8 of the total width of the relevant pin end face 16a (1.5mm). The contact point **P2** is forward of the center position **C** of the pin end face 16a in the direction of movement **T** of the chain, however, it is provided at a point wherein the distance **L** from the forward end in the direction of movement **T** of the chain on the pin end face 16a exceeds 1.5mm.

As shown in graphs (a) through (d) in FIG. 10, and in FIG. 11, as the contact point **P** changes in the sequence **P1** through **P4,** the change in the velocity vector **V1** of the contact point **P** immediately prior to, and the velocity vector (the direction of the tangent from the driven pulley 4) **V2** of the contact point **P** immediately after, contact with the sheave faces 9a and 10a of the driven pulley 4, is large. In other words, the approach angle θ increases in the sequence θ**a** through **θd**.

Thus, the further forward in the direction of movement **T** of the chain the contact point **P** is provided on the pin end face 16a, the more the approach angle θ can be reduced, and thus the more the contact noise can be reduced.

Next, a comparison of the graphs (b) and (c) in FIG. 10 shows that the discomfort felt by the driver due to contact noise in the case of the graph (c) is extremely great.

Thus, by providing the contact point **P** forward of the center position **C** of the pin end face 16a in the direction of movement of the chain, the discomfort felt by the driver due to contact noise can be reduced.

Furthermore, a comparison of the graphs (a) and (b) in FIG.10 shows that the approach angle θ for graph (a) is smaller than for graph (b) (**θa** < θ**b**).

Thus, by providing the contact point **P** such that the distance **L** from the forward end in the direction of movement **T** of the chain on the pin end face 16a is a distance less than 3/8 of the total width of the relevant pin end face 16a (1.5mm), the approach angle θ can be reduced, and contact noise can therefore be further reduced. The discomfort felt by the driver can then be further reduced.

Furthermore, to ensure that the pin end face 16a and the sheave faces 9a and 10a are in more stable contact, and that power is reliably transmitted, it is desirable that the contact point **P** be provided at a distance **L** from the end of the relevant end face 16a of 1/8 or greater, and more desirably at a distance from the end of the relevant end face 16a of 1/8 or greater and less than 3/8, of the total width of the end face 16a.

Furthermore, provided each contact point **P** is within the afore-mentioned range of the end face 16a, the plurality of pins 16 comprising a single chain may be formed at mutually different positions. In this case, since the pitch of the contact points **P** changes, contact noise resonance can be prevented.

Formation of contact points **P** at random positions will be described in detail in the second embodiment.

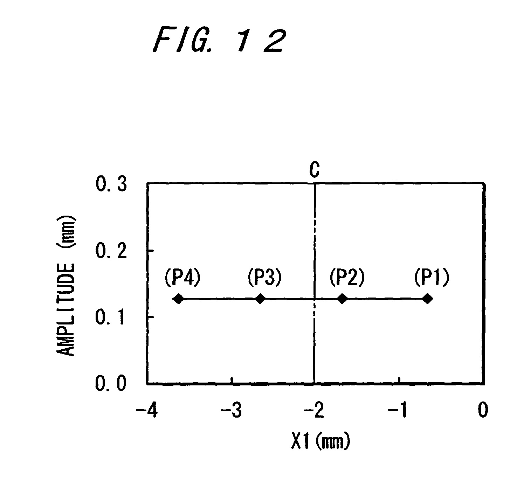

FIG. 12 shows the relationship between the position of the contact points **P1** through **P4** on the **X1** axis, and the amplitude on the **Y2** axis.

As shown in FIG. 12, the amplitude in relation to the contact points **P1** through **P4** is approximately constant, and amplitude is unaffected even if the position of the contact point **P** is changed. In other words, contact noise can be effectively reduced without amplifying the amplitude associated with polygonal movement.

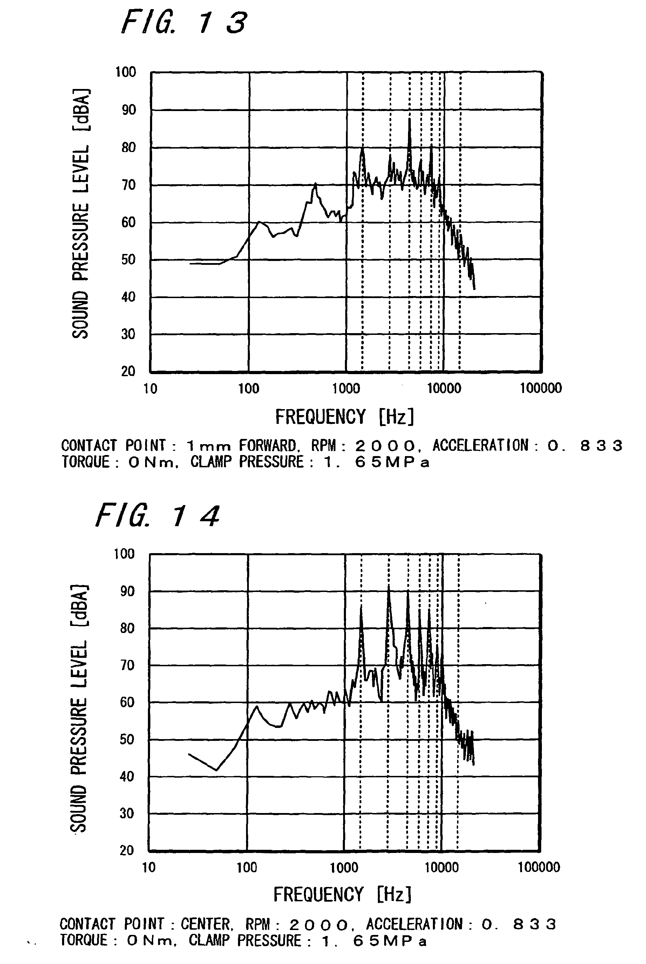

FIG.13 is a graph showing the sound pressure level at each frequency when the contact point **P** is displaced by 1mm from the center position **C** of the pin end face 16a forward in the direction of movement of the chain.

FIG. 14 is a graph showing the case wherein the contact point **P** is provided at the center position **C** of the pin end face 16a. The dashed lines shown in FIG. 13 and FIG. 14 show the fundamental frequency (1-dimensional) at left, and the 2-dimensional to 10-dimensional high-order frequencies in order towards the right.

Measurement conditions other than the position at the contact point **P** are RPM: 2000, acceleration: 0.833, load torque: 0Nm, and clamp pressure: 1.65MPa. The microphone was installed at a distance of 15cm from the circumference of the pulley and measurements taken.

Comparison of FIG. 13 and FIG. 14 show that sound pressure levels reached 90dBA at some frequencies of 1000Hz or greater, and that the waveform peak of the graph overall was increased. On the other hand, FIG. 12 shows that, except for one frequency, sound pressure levels were suppressed to 80dBA or less at frequencies of 1000Hz or greater. Furthermore, the waveform peak of the graph overall was reduced.

In other words, it is apparent that the contact noise is reduced by displacing the contact point **P** by 1mm from the center position **C** of the pin end face 16a forward in the direction of movement **T** of the chain 1.

According to the power transmission chain 1 of the afore-mentioned configuration, since the contact points **P** with the sheave faces 6a and 7a of the drive pulley 3, and the sheave faces 9a and 10a of the driven pulley 4, with the pin end face are formed on the end face 16a forward of the center position **C** of the relevant end face 16a in the direction of movement **T** of the chain, the contact point **P** moves in contact while forming a small angle in relation to the direction of the tangent from the pulleys 3 and 4. Simultaneously with contact, the direction of movement of the contact point **P** changes to the direction of the tangent from the pulleys 3 and 4. In other words, the change in the angle of the contact point in relation to the pulley is reduced, and the contact noise associated with the change in angle can be reduced.

Furthermore, since the contact point **P** is provided such that the distance **L** from the forward end in the direction of movement **T** of the chain in the width direction of the pin end face 16a is a distance less than 3/8 of the total width **W** of the relevant pin end face 16a, the contact point **P** is provided in a position further forward. In other words, the contact point **P** forms a smaller angle in relation to the direction of the tangent from the pulleys 3 and 4. Thus, the change in the angle in relation to the contact point **P** of the pulleys 3 and 4 is reduced, and the contact noise associated with the change in angle can be further reduced.

Furthermore, if the contact point P is provided such that the distance L from the end in the direction of movement T of the chain in the width direction of the pin end face 16a is a distance equal to or greater than 1/8 of the total width W of the relevant pin end face 16a, the change in the angle in relation to the pulleys 3 and 4 at the contact point P is reduced, and the end face 16a and the sheave faces 9a and 10a are in more stable contact. Thus, power can be more reliably transmitted.

Furthermore, if the contact point **P** is provided such that the distance **L** from the end in the direction of movement **T** of the chain in the width direction of the pin end face 16a is a distance equal to or greater than 1/8, and less than 3/8, of the total width **W** of the relevant pin end face 16a, the change in the angle in relation to the pulleys 3 and 4 at the contact point **P** is further reduced, and the end face 16a and the sheave faces 9a and 10a are in more stable contact.

Furthermore, according to the chain-type power transmission device 2 of the present invention, since the afore-mentioned power transmission chain 1 is employed, a power transmission device 2 of low noise may be constituted, and the discomfort felt by the driver due to contact noise can be reduced.

A pin end face 16a of spherical shape is shown in the present embodiment, however, a curved surface other than spherical, or a shape wherein the cross-section in the length direction is a straight line or a trapezoid (trapezoidal crowning) may be used.

In this case, a plurality of contact points **P** may be formed within one end surface (a contact line when continuous), however it is desirable that all contact points **P** within the end surface be within the afore-mentioned prescribed range of contact points **P**.

The power transmission device 2 of the present invention is not limited to an aspect wherein the groove width of both the drive pulley 3 and the driven pulley 4 change. In other words, an aspect may be employed wherein the groove width of only one pulley is changed, while the other does not change and is of fixed width.

Furthermore, an aspect wherein the groove width is changed continuously (stepless) has been described above, however it may be applied to other power transmission devicees 2 wherein groove width changes in steps, or is fixed (fixed speed).

### Second Embodiment

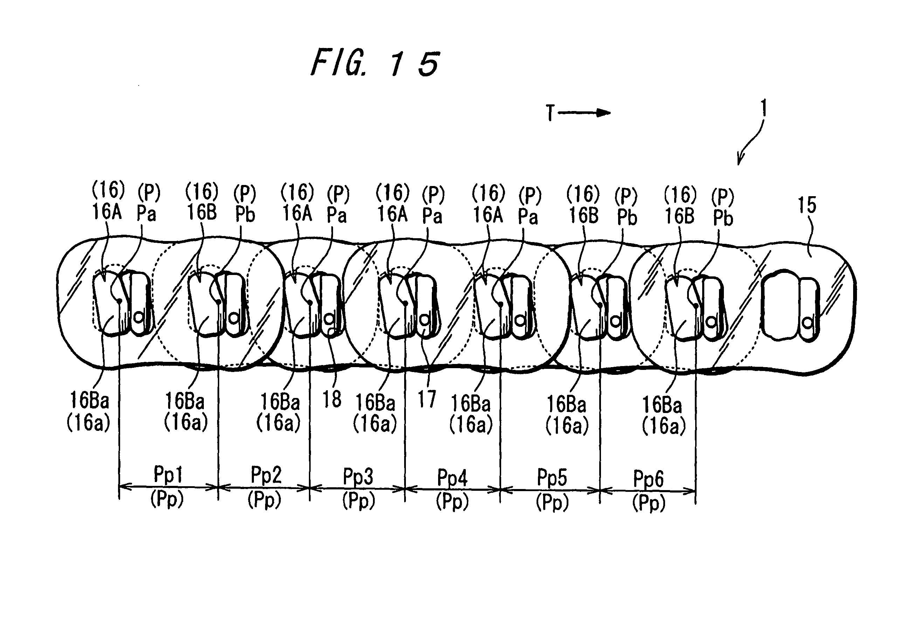

FIG. 15 shows the essential components of the power transmission chain 1 related to the second embodiment of the present invention.

The present embodiment differs from the first embodiment in that the pins 16 are comprised of at least two types of pins wherein the position of the contact point P differs, for example, pin 16A and 16B, and arranged such that the distance between these pins 16A and 16B and the adjacent pin 16 of Pp (contact point pitch) is random.

As shown in FIG. 15, pins 16 of the chain 1 are arranged from left in the sequence pin 16A, pin 16B, pin 16A, pin 16A, pin 16A, pin 16B, and pin 16B. Since the contact point pitches (distances between contact points **P**) **Pp1, Pp2, Pp3, Pp4, Pp5,** and **Pp6** are slightly long, slightly short, intermediate, intermediate, slightly long, and intermediate in that order, pitches are random. The arrangement of pins 16A and 16B is not limited to the afore-mentioned sequence.

According to the power transmission chain 1 of the present embodiment, the difference in the position of the contact point **P** on the pin end face 16a is employed to ensure that the distance between contact points (contact point pitch) **Pp** differs slightly. Thus, the cycle with which the contact point **P** contacts the sheave faces 6a, 7a, 9a, and 10a is disrupted. Contact noise resonance can be greatly prevented by disrupting the contact cycle.

Furthermore, only the pin end face 16a of the two types of pins 16A and 16B having different positions of contact points **P** need be machined. Furthermore, since the pin 16 which is identical in shape except for the pin end face 16a is used, a common jig may be employed for assembly of pins 16 and links 15. Thus, costs of manufacture and assembly do not increase, and the product is cheap.

### Third Embodiment

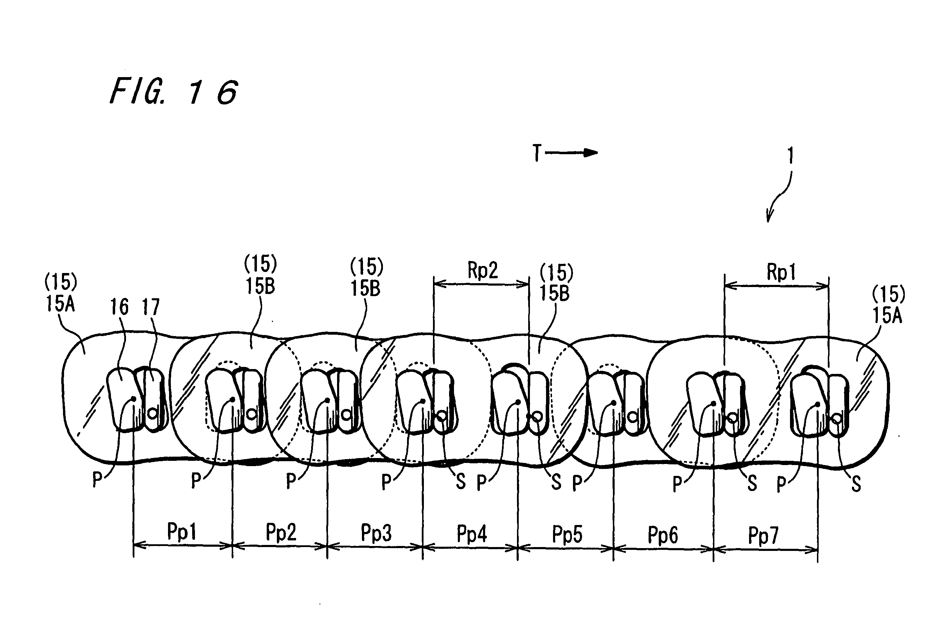

FIG. 16 shows the essential components of the power transmission chain 1 related to the third embodiment of the present invention.

The present embodiment differs from other embodiments in that the links 15 are comprised of at least two types wherein the link pitch **Rp** differs, for example, link 15A and link 15B, and arranged such that the distance between these links 15A and 15B and the adjacent pin 16 **Pp** (contact point pitch) is random.

The link pitch **Rp** noted here is the distance between pins 16 inserted through through-holes 18A and 18B in the same link 15. This link pitch **Rp** is the distance between the contact points **S** of the pin 16 and strip 17. This link pitch **Rp** is measured with the chain 1 in a straight (not curved) condition.

As shown in FIG. 16, the position of the contact point **P** of the pin end face 16a is the same for all pins 16. The link pitch **Rp** for link 15A is slightly greater than for link 15B. In the chain 1 of the present embodiment, a plurality of links 15B are arranged linearly in the length direction of the chain 1, while links 15A are dispersed in the length direction of the chain 1. By arranging the links in this manner, the contact point pitches **Pp1, Pp2, Pp3, Pp4, Pp5, Pp6** and **Pp7** of the pins 16 inserted through the links 15 are random. The arrangement of pins 15A and 15B are not limited to the afore-mentioned sequence.

According to the power transmission chain 1 of the present embodiment, links 15 having a different distance (link pitch) **Rp** between the pins 16 inserted in the relevant same link 15 are employed to ensure that the distance between contact points (contact point pitch) **Pp** differs slightly. Thus, the cycle with which the contact point **P** contacts the sheave faces 6a, 7a, 9a, and 10a is disrupted. Contact noise resonance can be greatly prevented by disrupting the contact cycle.

### Fourth Embodiment

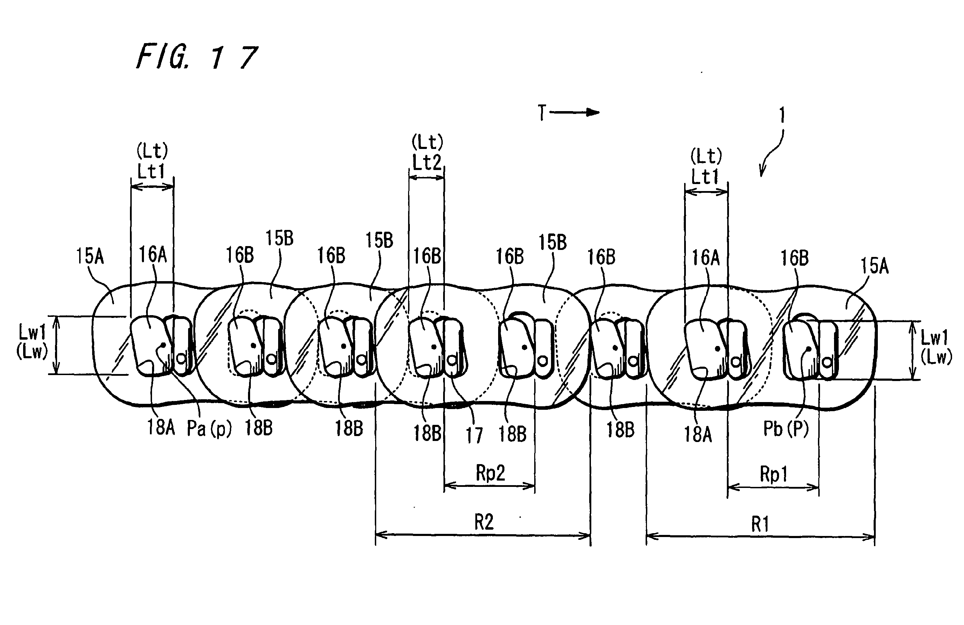

FIG. 17 shows the essential components of the power transmission chain 1 related to the fourth embodiment of the present invention.

The present embodiment differs from other embodiments in that a plurality of pins 16 includes pins 16 having differing stiffness in relation to the force acting in the length direction of the pin.

In practice, for example, by employing a plurality of types of pins 16 having differing cross-sectional shapes or cross-sectional areas in the chain 1 of the present embodiment, stiffness in relation to the force acting in the length direction of the pin 16 is made to differ.

Here, the phrase "having differing cross-sectional shapes or cross-sectional areas" implies that the cross-sectional shape or cross-sectional area differs at one or more of the cross-sections at the same position in the length direction of any two compared pins.

Differing stiffness in relation to the force acting in the length direction of the pin may be obtained by the use of different materials for the pins 16, or by heat treatment of the pins 16.

Furthermore, it is desirable that the length of all pins 16 in the length direction in practice be the same. In this case, wear on the end faces 16a of all pins 16 can be made uniform.

As shown in FIG. 17, pins 16 are comprised of a thick pin 16A having a comparatively large cross-sectional area, and a thin pin 16B having a comparatively small cross-sectional area, in the vertical cross-section in the length direction.

The afore-mentioned contact points **Pa** and **Pb** are provided on both end faces of this thick pin 16A and thin pin 16B. Furthermore, the length in the length direction of the thick pin 16A and thin pin 16B are equal in practice.

The equal length of the pins 16 is within the range of error occurring when a plurality of pins 16 is manufactured to equal length with normal methods.
Furthermore, the range of error is, for example, a maximum of 50µm difference in the length of the pins 16 in the length direction.

The cross-sectional shape (the cross-sectional shape in the vertical direction in the length direction of the pin, hereafter referred to simply as the 'cross-sectional shape') at each position in the length direction of the pins 16, and the cross-sectional area (the cross-sectional area in the vertical direction in the length direction of the pin, hereafter referred to simply as the 'cross-sectional area') of the thick pin 16A and thin pin 16B is approximately equal along the entire length of the pin 16 in the length direction. In other words, each pin 16A and 16B is of approximately the same cross-section, and approximately the same cross-sectional area, at all positions along the length direction of the pin 16.

The cross-sectional shape of the thick pin 16A is a shape formed by enlarging the cross-sectional shape of the thin pin 16B in the length direction of the chain 1. In other words, when the cross-sectional shape of the thick pin 16A and the cross-sectional shape of the thin pin 16B as fitted to the chain 1 are compared, the length **LW1 (Lw)** in the height direction (top-bottom direction in FIG.17) perpendicular to the length direction of the chain 1 are approximately equal. The length **Lt1 (Lt)** in the length direction of the chain 1 in the cross-sectional shape of the thick pin 16A is greater than the length **Lt2 (Lt)** in the length direction of the chain 1 in the cross-sectional shape of the thin pin 16B.

Furthermore, when the cross-sectional area of the thick pin 16A and the cross-sectional area of the thin pin 16B are compared, the cross-sectional area of the thick pin 16A is between 1.1 and 2 times the cross-sectional area of the thin pin 16B.

The shape of the through-holes 18 in the links 15 corresponds to the shape of the thick pin 16A and the thin pin 16B. In other words, the large through-hole 18A wherein the thick pin 16A is inserted is formed larger than the small through-hole 18B wherein the thick pin 16D is inserted.

Since the chain 1 is able to be curved in the circumferential direction, the shapes of the pair of through-holes 18A and 18B formed in one link 15 are mutually different, however in this specification, when referring to the large through-hole 18A and the small through-hole 18B, the mutual difference in the shapes is ignored, and the through-holes wherein the thick pin 16A is inserted are all referred to as 'large through-hole 18A', and the through-holes wherein the thin pin 16B is inserted are all referred to as 'small through-hole 18B'.

Furthermore, a plurality of types of links 15 are employed in the chain 1 of the present embodiment. In other words, the links 15 consist of the long link 15A having the large through-hole 18A, and the short link 15B not having the large through-hole 18A. Of the two through-holes in the long link 15A, one is the large through-hole 18A, and the other is the small through-hole 18B.

On the other hand, the two through-holes in the short link 15B are both small through-holes 18B.

Furthermore, the link pitch **Rp1** of the long link 15A is longer than the link pitch **Rp2** of the short link 15B. Furthermore, as appropriate for the link pitches **Rp1** and **Rp2,** the length **R1** of the long link 15A in the length direction of the chain 1 is longer than the length **R2** of the short link 15B in the length direction of the chain 1.

Furthermore, since the pins 16 are of two types of differing cross-sectional area, and the links 15 are of two types of differing link pitch **Rp**, the distance between the contact points **P** (contact point pitch) in the chain 1 of the present embodiment is random within the chain 1. Furthermore, the difference between the differing pitches is also increased.

A single type of link 15 may also be employed in the chain 1.

The principles of generation of contact noise in the chain 1 will be described below.

When the chain 1 approaches the sheave faces 6a, 7a, 9a, and 10a of the pulleys 3 and 4, the pins 16 of the chain 1 collide with these sheave faces and press against the relevant sheave faces. In reaction, the end faces 16a of the pins 16 are pushed from the sheave faces, and are subject to a force tending to compress and deform the length in the length direction (such deformation is hereafter referred to as 'compression deformation'). The pins 16 are elastically deformed by this force, and are subsequently deformed to return to their original shape (such deformation is hereafter referred to as 'restoration deformation'). In this case, the sheave faces are again pushed, and the pulleys 3 and 4 vibrate, giving rise to contact noise.

According to the power transmission chain 1 of the present embodiment, when the pins 16 are subject to compression deformation and restoration deformation, force applied to the pulleys 3 and 4 by the relevant pin 16, and the timing and the like, differ. Thus, the frequency of the contact noise generated from the pulleys 3 and 4 is dispersed, and the peak sound pressure level of the contact noise can be reduced. Furthermore, resonance of the pulleys 3 and 4 can be suppressed.

In chain 1, it desirable that pins 16 having differing stiffness in relation to the force acting in the length direction be randomly arranged. In this case, the peak sound pressure level of the contact noise can be further reduced.

Furthermore, since pin 16A, having a length in the length direction of the chain 1 increasing with the length of the link 15A having the long link pitch **Rp**, is inserted through the plurality of links 15A and 15B having differing link pitches **Rp**, chain design is simplified.

In other words, as described above, when the plurality of pins 16A and 16B are employed to reduce contact noise, the plurality of types of pins 16A and 16B wherein only the length **Lt** in the length direction of the chain 1 of the cross-section of the pin 16 differs are manufactured, and the link pitch **Rp** of individual links 15 is changed appropriately. Thus, a chain 1 wherein the link pitch **Rp** and the length **Lt** in the length direction of the chain 1 of the cross-section of the pin differ can be easily designed.

Furthermore, by changing the length in the length direction of the chain 1 itself in response to the related link pitch **Rp** and length **Lt** in the length direction of the chain 1, for example, in comparison to changing the length **Lw** in the top-bottom direction of the cross-section of the pin 16 (chain height direction), the chain 1 can be easily designed.

### Fifth Embodiment

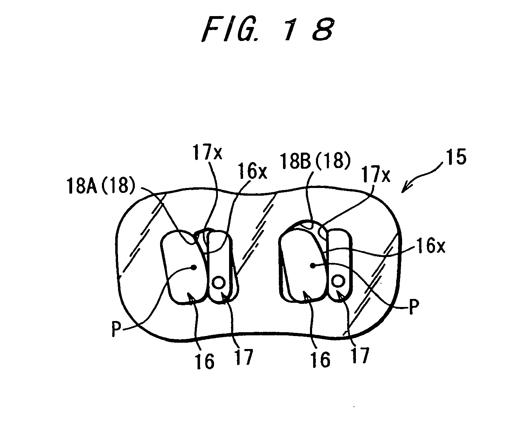

FIG. 18 shows the essential components of the power transmission chain 1 related to the fifth embodiment of the present invention.

The present embodiment differs from other embodiments in that the track of the contact position wherein the pin 16 and the strip 17 being the non-contact pin are in contact is an involute of a circle, and includes at least two types of pins 16 and strips 17 having differing radii of the base circle of this involute.

In practice, the track of the contact point of the pin 16 and the strip 17 is an involute of a circle in side elevation when the chain 1 is viewed from the pin end face 16a.

As shown in FIG. 18, the cross-sectional shape of the contact face 16x with the strip 17 on the pin 16 is an involute curve having the prescribed radius r of the base circle, and the contact face 17x with the pin 16 on the strip 17 is a plane (straight-line cross-sectional shape). Thus, the track of the position of contact between the pin 16 and the strip 17 with rolling contact of the pin 16 and the strip 17 is an involute of a circle.

Of the contact faces, the cross-sectional shape of the range of rolling contact of the pin 16 and the strip 17 (hereafter referred to as the 'operative side face') can be an involute curve.

Furthermore, since the track of the contact point of the pin 16 and the strip 17 is an involute of a circle, the contact face 16x of the pin 16 may be an involute shape, and the contact face 17x of the strip 17 may be a flat plane, as in the present embodiment, and conversely, the contact face 17x of the strip 17 may be an involute shape, and the contact face 16x of the pin 16 may be a flat plane.

Furthermore, by making both contact faces 16x and 17x curved faces, the afore-mentioned track can be made an involute of a circle. In this case, it is desirable that the cross-sectional shape of the operative side faces of the contact face 16x of the pin 16, and the contact face 17x of the strip 17, are the same.

The involute in the present invention also includes an approximate involute. Even with an approximate involute, the afore-mentioned polygonal vibration (= "chordal action", see, JP-A-08-312725) can be suppressed to a certain extent.

The chain 1 of the present embodiment provides at least two types of pins 16 of differing radii of the base circle of the involute in the cross-sectional shape of the (operative side face of the) contact face 16x. As a result, an assembly of the pin 16 and strip 17 of at least two types of radii of the base circle of the involute being the track of the contact position of the pin 16 and the strip 17 is formed.

According to the power transmission chain 1 of the present embodiment, by making the track of the contact point of the pin 16 and the strip 17 an involute of a circle, the contact point **P** when the chain 1 contacts the pulleys 3 and 4 moves to form a smaller angle in relation to the direction of the tangent from the pulleys 3 and 4. Simultaneously with contact, the direction of movement of the contact point **P** changes to the direction of the tangent from the pulleys 3 and 4. In other words, the change in the angle of the contact point P in relation to the pulleys 3 and 4, and the contact noise associated with the change in angle, can be reduced.

Furthermore, since at least two types of groups of pins 16 and strips 17 of differing radii of the base circle of the involute are provided, polygonal vibration resonance is further suppressed, and the effect of suppressing contact noise with the involute is increased.

It is desirable that at least two types of groups of pins 16 and strips 17 of differing radii of the base circle of the involute are each randomly arranged. In this case, the effect of suppressing contact noise with the involute is further increased.

Description will be made of the desirable aspect of the cross-sectional shape in the contact face 16x of the pin 16 in the chain 1 of the afore-mentioned embodiment.

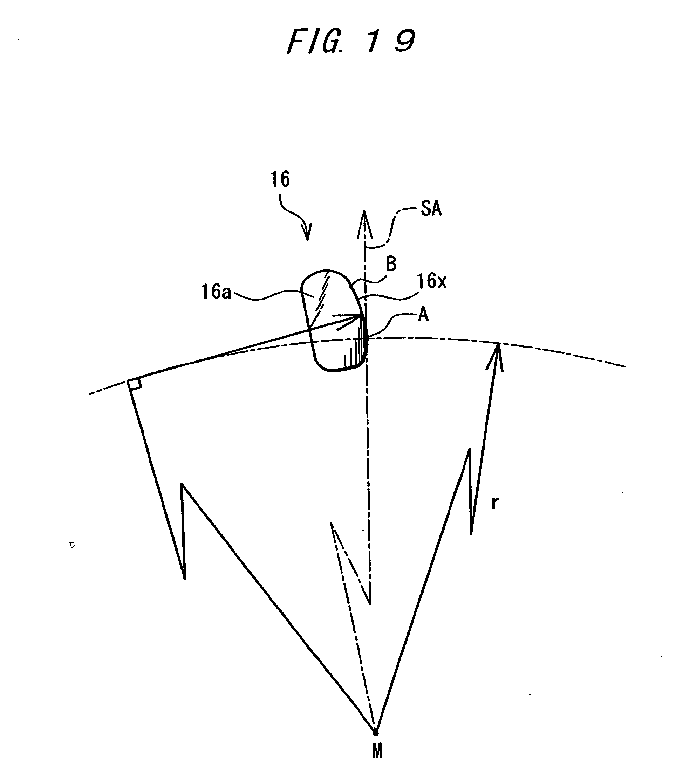

FIG. 19 is a figure describing this desirable shape, and is a side elevation of the pin 16 from the pin end face 16a.

Of the contact faces 16x of the pins 16, the operative side face in rolling contact with the strip 17 is the area from the tangent A (shown by a point in FIG. 19, hereafter referred to 'point **A'**) from the pin 16 in a condition in which the chain is not curved and the strip 17 to the tangent **B** (shown by a point in FIG. 19, hereafter referred to 'point **B'**). The cross-section line of the contact face 16x including the cross-section line of this operative side face is comprised of a smooth convex curve.

As shown in FIG. 19, it is desirable that the center **M** of the base circle radius r is arranged on the tangent **SA** at the point **A** on the pin cross-section line for the involute curve of the operative side face on the pin cross-section. Polygonal vibration reaches its minimum with the chain 1 applied to the pulley (not shown in figures), and the base circle radius r set to approximately equal to the distance **dA** from the center of chain as applied to the pulley to point **A**. This conditions is desirable.

However, if, for example, in the case of a motor vehicle CVT, the applied radius of the chain changes within the prescribed range, the afore-mentioned distance **dA** also changes. Thus, in this case, it is desirable that the base circle radius r is set so that the afore-mentioned **dA** is **dAx ≤ 2 (dAx)** when the applied radius of the chain is at its maximum, and a plurality of types of base circle radii r within this range are employed.
While specific embodiments of the invention have been disclosed above, the features of the various embodiments can readily be combined with each other resulting in further embodiments according to the present invention.

## Claims

1. A power transmission chain spanning a first pulley (3) having a sheave face of conical shape and a second pulley (4) having a sheave face of a conical shape, comprising:
- a plurality of links (15); and
- a plurality of pins (16) mutually joining the plurality of links (15) with both end faces of the pins (16) contacting the sheave faces (6a, 7a; 9a, 10a) of the first and second pulleys (3, 4) and each pin having a contact point (P) formed such as to contact the sheave faces forward of the center position (C) of each end face (16a) in the direction of movement (T) of the chain (1).

2. The chain according to claim 1,
wherein the contact point (P) is provided such that the distance (L) from the forward end of the pin end face (16a) in the direction of movement (T) of the chain (1) is a distance less than 3/8 of the total width of the relevant pin end face (16a).

3. The chain according to claim 1 or 2,
wherein the contact point (P) is provided such that the distance (L) from the forward end of the pin end face (16a) in the direction of movement (T) of the chain (1) is a distance equal to or greater than 1/8 of the total width of the relevant pin end face (16a).

4. The chain according to any of claims 1 to 3,
wherein the plurality of pins (16) comprise at least two types of pins (16A, 16B) in which the position of the contact points (Pp, Pp1 to Pp6) differs, and arranged such that the distance between the contact points of adjacent pins (16A, 16B) is random.

5. The chain according to any of claims 1 to 4,
wherein the plurality of links (15) comprise at least two types of links (15A, 15B) in which the link pitch (Rp) differs, and arranged such that the distance (Pp) between the contact points (S) of adjacent pins (16) is random.

6. The chain according to any of claims 1 to 5,
wherein the plurality of pins (16) includes pins of differing stiffness in relation to the force acting in the length direction of the pin (16).

7. The chain according to any of claims 1 to 6,
wherein the links (15) each have a first through-hole (18A) and a second through-hole (18B) arranged side-by-side in the longitudinal direction of the chain (1);
wherein each of the pins (16) and each of non-contact pins (17) not contacting the sheave faces (6a, 7a; 9a, 10a) are inserted into each of the through-holes (18A, 18B) so as to be in rolling contact with each other;
wherein the track of the contact position (P) at which the pins (16) and the non-contact pins (17) contact is an involute of a circle; and
wherein at least two types of groups of the pins (16) and the non-contact pins (17) of differing radii of the base circle of the involute are included.

8. A power transmission device, comprising:
- a first pulley (3) having a sheave face of conical shape;
- a second pulley (4) having a sheave face of conical shape;
- a power transmission chain (1) spanning the both pulleys (3, 4), comprising;
- a plurality of links (15) ; and
- a plurality of pins (16) mutually joining the plurality of links (15) with both end faces (16a) of the pins (16) contacting the sheave faces (6a, 7a; 9a, 10a) of the first and second pulleys (3, 4) and each pin having a contact point (P) formed such as to contact the sheave faces forward of the center position (C) of each end face (16a) in the direction of movement (T) of the chain (1).

9. The device according to claim 8,
wherein the plurality of pins (16) comprise at least two types of pins (16A, 16B) in which the position of the contact points (Pp1 to Pp6) differs, and arranged such that the distance between the contact points (Pp1 to Pp6) of adjacent pins (16A, 16B) is random.

## Patentansprüche

1. Kraftübertragungskette, die sich über eine erste Scheibe (3) mit einer Scheibenoberfläche mit konischer Formgebung und über eine Scheibe (4) mit einer Scheibenoberfläche mit konischer Formgebung erstreckt und die folgendes aufweist:
- eine Vielzahl von Verbindungsgliedern (15); und
- eine Vielzahl von Stiften (16), die die Vielzahl von Verbindungsgliedern (15) miteinander verbinden, wobei die beiden Endflächen der Stifte (16) mit den Scheibenoberflächen (6a, 7a; 9a, 10a) der ersten und der zweiten Scheibe (3, 4) in Berührung stehen und wobei jeder Stift eine Berührungsstelle (P) aufweist, die derart ausgebildet ist, daß diese mit den Scheibenoberflächen an einer Stelle in Berührung steht, die sich in der Bewegungsrichtung (T) der Kette (1) vor der zentralen Stelle (C) jeder Endfläche (16a) befindet.

2. Kette nach Anspruch 1,
wobei die Berührungsstelle (P) derart vorgesehen ist, daß die Distanz (L) von dem vorderen Ende der Stiftendfläche (16a) in der Bewegungsrichtung (T) der Kette (1) eine Distanz ist, die geringer ist als 3/8 der Gesamtbreite der betreffenden Stiftendfläche (16a).

3. Kette nach Anspruch 1 oder 2,
wobei die Berührungsstelle (P) derart vorgesehen ist, daß die Distanz (L) von dem vorderen Ende der Stiftendfläche (16a) in Bewegungsrichtung (T) der Kette (1) eine Distanz ist, die gleich oder größer als 1/8 der Gesamtbreite der betreffenden Stiftendfläche (16a) ist.

4. Kette nach einem der Ansprüche 1 bis 3,
wobei die Vielzahl der Stifte (16) mindestens zwei Arten von Stiften (16A, 16B) umfaßt, bei denen die Position der Berührungsstellen (Pp, Pp1 bis Pp6) unterschiedlich ist und die derart angeordnet ist, daß die Distanz zwischen den Berührungsstellen von einander benachbarten Stiften (16A, 16B) beliebig ist.

5. Kette nach einem der Ansprüche 1 bis 4,
wobei die Vielzahl der Verbindungsglieder (15) mindestens zwei Arten von Verbindungsgliedern (15A, 15B) umfaßt, bei denen der Verbindungsgliedabstand (Rp) unterschiedlich ist, und wobei die Verbindungsglieder derart angeordnet sind, daß die Distanz (Pp) zwischen den Berührungsstellen (S) von einander benachbarten Stiften (16) beliebig ist.

6. Kette nach einem der Ansprüche 1 bis 5,
wobei die Vielzahl der Stifte (16) Stifte unterschiedlicher Steifigkeit in bezug auf die in Längsrichtung der Stifte (16) wirkende Kraft beinhaltet.

7. Kette nach einem der Ansprüche 1 bis 6,
wobei die Verbindungsglieder (15) jeweils eine erste Durchgangsöffnung (18A) und eine zweite Durchgangsöffnung (18B) aufweisen, die in Längsrichtung der Kette (1) Seite an Seite angeordnet sind;
wobei jeder der Stifte (16) und jeder von berührungslosen Stifte (17), die nicht mit den Scheibenoberflächen (6a, 7a; 9a, 10a) in Berührung stehen, in eine jeweilige Durchgangsöffnung (18A, 18B) derart eingeführt sind, daß diese in Abrollberührung miteinander stehen;
wobei die Bahn der Berührungsstellen (P), an denen die Stifte (16) und die berührungslosen Stifte (17) miteinander in Berührung treten, eine Kreisevolvente ist; und
wobei mindestens zwei Arten von Gruppen der Stifte (16) und der berührungslosen Stifte (17) mit unterschiedlichen Radien des Grundkreises der Evolvente vorhanden sind.

8. Kraftübertragungsvorrichtung, die folgendes aufweist:
- eine erste Scheibe (3) mit einer Scheibenoberfläche mit konischer Formgebung;
- eine zweite Scheibe (4) mit einer Scheibenoberfläche mit konischer Formgebung;
- eine Kraftübertragungskette (1), die sich über beide Scheiben (3, 4) erstreckt und die folgendes aufweist:
- eine Vielzahl von Verbindungsgliedern (15); und
- eine Vielzahl von Stiften (16), die die Vielzahl von Verbindungsgliedern (15) miteinander verbinden, wobei die beiden Endflächen (16a) der Stifte (16) mit den Scheibenoberflächen (6a, 7a; 9a, 10a) der ersten und der zweiten Scheibe (3, 4) in Berührung stehen und wobei jeder Stift eine Berührungsstelle (P) aufweist, die derart ausgebildet ist, daß diese mit den Scheibenoberflächen an einer Stelle in Berührung steht, die sich in der Bewegungsrichtung (T) der Kette (1) vor der zentralen Stelle (C) jeder Endfläche (16a) befindet.

9. Vorrichtung nach Anspruch 8,
wobei die Vielzahl der Stifte (16) mindestens zwei Arten von Stiften (16A, 16B) umfaßt, bei denen die Position der Berührungsstellen (Pp1 bis Pp6) unterschiedlich ist und die derart angeordnet ist, daß die Distanz zwischen den Berührungsstellen (Pp1 bis Pp6) von einander benachbarten Stiften (16A, 16B) beliebig ist.

## Revendications

1. Chaîne de transmission de puissance s'étendant sur une première poulie (3) ayant une face de gorge de forme conique et une deuxième poulie (4) ayant une face de gorge de forme conique, comprenant:
- une pluralité de maillons (15); et
- une pluralité d'axes (16) joignant mutuellement la pluralité de maillons (15), les deux faces d'extrémité des axes (16) venant en contact avec les faces de gorge (6a, 7a; 9a, 10a) des première et deuxième poulies (3, 4) et chaque axe ayant un point de contact (P) formé de manière à venir en contact avec les faces de gorge en avant de la position centrale (C) de chaque face d'extrémité (16a) dans la direction de mouvement (T) de la chaîne (1).

2. Chaîne selon la revendication 1,
dans laquelle le point de contact (P) est prévu de sorte que la distance (L) par rapport à l'extrémité avant de la face d'extrémité d'axe (16a) dans la direction de mouvement (T) de la chaîne (1) soit une distance inférieure à 3/8 de la largeur totale de la face d'extrémité d'axe (16a) concernée.

3. Chaîne selon la revendication 1 ou 2,
dans laquelle le point de contact (P) est prévu de sorte que la distance (L) par rapport à l'extrémité avant de la face d'extrémité d'axe (16a) dans la direction de mouvement (T) de la chaîne (1) soit une distance égale ou supérieure à 1/8 de la largeur totale de la face d'extrémité d'axe (16a) concernée.

4. Chaîne selon l'une quelconque des revendications 1 à 3,
dans laquelle la pluralité d'axes (16) comprend au moins deux types d'axes (16A, 16B), dans lesquels la position des points de contact (Pp, Pp1 à Pp6) diffère, et agencés de sorte que la distance entre les points de contact d'axes adjacents (16A, 16B) soit aléatoire.

5. Chaîne selon l'une quelconque des revendications 1 à 4,
dans laquelle la pluralité de maillons (15) comprend au moins deux types de maillons (15A, 15B), dans lesquels le pas des maillons (Rp) diffère, et agencés de sorte que la distance (Pp) entre les points de contact (S) d'axes adjacents (16) soit aléatoire.

6. Chaîne selon l'une quelconque des revendications 1 à 5,
dans laquelle la pluralité d'axes (16) comprend des axes de différentes rigidités en relation avec la force agissant dans la direction de longueur de l'axe (16).

7. Chaîne selon l'une quelconque des revendications 1 à 6,
dans laquelle les maillons (15) comportent chacun un premier trou traversant (18A) et un deuxième trou traversant (18B) agencés côte à côte dans la direction longitudinale de la chaîne (1);
dans laquelle chacun des axes (16) et chacun des axes sans contact (17) qui ne viennent pas en contact avec les faces de gorge (6a, 7a; 9a, 10a) sont insérés dans chacun des trous traversants (18A, 18B) de manière à être en contact roulant les uns avec les autres;
dans laquelle la piste de la position de contact (P) sur laquelle les axes (16) et les axes sans contact (17) viennent en contact est une développante d'un cercle; et
dans laquelle au moins deux types de groupes des axes (16) et des axes sans contact (17) de différents rayons du cercle de base de la développante sont inclus.

8. Dispositif de transmission de puissance, comprenant:
- une première poulie (3) ayant une face de gorge de forme conique;
- une deuxième poulie (4) ayant une face de gorge de forme conique;
- une chaîne de transmission de puissance (1) s'étendant sur les deux poulies (3, 4), comprenant:
- une pluralité de maillons (15); et
- une pluralité d'axes (16) joignant mutuellement la pluralité de maillons (15), les deux faces d'extrémité (16a) des axes (16) venant en contact avec les faces de gorge (6a, 7a; 9a, 10a) des première et deuxième poulies (3, 4) et chaque axe ayant un point de contact (P) formé de manière à venir en contact avec les faces de gorge en avant de la position centrale (C) de chaque face d'extrémité (16a) dans la direction de mouvement (T) de la chaîne (1).

9. Dispositif selon la revendication 8,
dans lequel la pluralité d'axes (16) comprend au moins deux types d'axes (16A, 16B), dans lesquels la position des points de contact (Pp1 à Pp6) diffère, et agencés de sorte que la distance entre les points de contact (Pp 1 à Pp6) d'axes adjacents (16A, 16B) soit aléatoire.
